# EUROPÄISCHE PATENTSCHRIFT

(11) **EP 3 484 748 B1**
(45) Veröffentlichungstag und Bekanntmachung des Hinweises auf die Patenterteilung: **20.04.2022**
(21) Anmeldenummer: 17737257.0
(22) Anmeldetag: 07.07.2017
(51) Int. Cl.: B60N 3/10

(54) **AUFNAHMEVORRICHTUNG FÜR EINEN FAHRZEUGINNENRAUM SOWIE VERFAHREN ZUM DÄMPFEN EINER BEWEGUNG EINES AUFNAHMEABSCHNITTS EINER AUFNAHMEVORRICHTUNG**
HOLDER DEVICE FOR A VEHICLE INTERIOR AND METHOD FOR DAMPING A MOVEMENT OF A RECEIVING SECTION OF A HOLDER DEVICE
RÉCEPTACLE DESTINÉ À L'HABITACLE D'UN VÉHICULE AINSI QUE PROCÉDÉ PERMETTANT D'AMORTIR UN DÉPLACEMENT D'UNE PARTIE RÉCEPTION D'UN RÉCEPTACLE

(30) Priorität: 12.07.2016 DE 102016112747
(43) Veröffentlichungstag der Anmeldung: 22.05.2019
(73) Patentinhaber: HS Products Engineering GmbH, 82216 Maisach (DE)
(72) Erfinder: SPECHT, Martin, 82340 Feldafing (DE); HUBER, Dietmar Christian, 82362Weilheim (DE)
(74) Vertreter: Bals & Vogel Patentanwälte PartGmbB
(86) Internationale Anmeldenummer: PCT/EP2017/067050
(87) Internationale Veröffentlichungsnummer: WO 2018/011068

(56) Entgegenhaltungen:
- EP-A2- 1 281 567
- DE-A1- 19 963 202
- US-A- 5 060 899

## Beschreibung

Die vorliegende Erfindung betrifft eine Aufnahmevorrichtung für einen Fahrzeuginnenraum, aufweisend einen Aufnahmeabschnitt zum Aufnehmen von Gegenständen in einer Aufnahmeposition des Aufnahmeabschnitts, einen Grundkörper, in dem der Aufnahmeabschnitt in einer Ruheposition des Aufnahmeabschnitts angeordnet ist, eine Antriebseinheit zum Bewegen des Aufnahmeabschnitts aus der Ruheposition über eine Zwischenposition in die Aufnahmeposition, in welcher der Aufnahmeabschnitt aus dem Grundkörper herausragt, wobei die Antriebseinheit den Aufnahmeabschnitt zum Bewegen aus der Ruheposition in die Zwischenposition mit einer ersten Antriebskraft beaufschlagt und zum Bewegen aus der Zwischenposition in die Aufnahmeposition mit einer zweiten Antriebskraft beaufschlagt, wobei die erste Antriebskraft kleiner ist als die zweite Antriebskraft. Ferner betrifft die Erfindung ein Verfahren zum Dämpfen einer Bewegung eines Aufnahmeabschnitts einer Aufnahmevorrichtung für einen Fahrzeuginnenraum.

Aufnahmevorrichtungen für Gegenstände, beispielsweise für Getränkebecher oder Flaschen, in einem Fahrzeuginnenraum sind weitläufig bekannt. Dabei können derartige Aufnahmevorrichtungen beispielsweise als ein ausfahrbares Einschubelement ausgebildet sein, wobei ein Aufnahmeabschnitt für ein Ermöglichen eines Aufnehmens des jeweiligen Gegenstands aus einem Grundkörper der Aufnahmevorrichtung herausbewegt wird. Dadurch kann eine besonders platzsparende und benutzerfreundliche Ausgestaltung einer Aufnahmevorrichtung bereitgestellt werden, da der Aufnahmeabschnitt nur dann in den Innenraum des Fahrzeugs ragt und aus diesem zugänglich ist, wenn er benötigt wird. Zu allen anderen Zeiten bleibt der Aufnahmeabschnitt bevorzugt vollständig im Inneren des Grundkörpers der Aufnahmevorrichtung angeordnet.

Als nachteilig bei bekannten Aufnahmevorrichtungen hat sich dabei herausgestellt, dass eine Bewegungsgeschwindigkeit des Aufnahmeabschnitts oftmals zu einem Ende der Ausfahrbewegung insbesondere deutlich zunimmt. Dies wird von einem Benutzer zumeist als unangenehm empfunden. Diese Zunahme kann dabei beispielsweise dadurch erzeugt sein, dass, insbesondere bei Aufnahmevorrichtungen für Getränke, zur Steigerung einer Anordnungshöhe der Aufnahmevorrichtung, beim Ausfahren ein Aufnahmeboden, beispielsweise federbelastet, abgeklappt wird. Dadurch kann sich eine gesamte Antriebskraft, die auf den Aufnahmeabschnitt wirkt, erhöhen, woraus wiederum eine Zunahme der Geschwindigkeit der Ausfahrbewegung resultiert.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise zumindest eine Aufnahmevorrichtung für einen Fahrzeuginnenraum sowie ein Verfahren zum Dämpfen einer Bewegung eines Aufnahmeabschnitts einer derartigen Aufnahmevorrichtung zu verbessern, wobei insbesondere eine verbesserte Dämpfung einer Bewegung des Aufnahmeabschnitts und bevorzugt eine gleichmäßige Ausfahrbewegung des Aufnahmeabschnitts bereitgestellt werden soll.

Voranstehende Aufgabe wird gelöst durch eine Aufnahmevorrichtung mit den Merkmalen des Anspruchs 1 und ein Verfahren mit den Merkmalen des Anspruchs 13. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Aufnahmevorrichtung beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung wird die Aufgabe gelöst durch eine Aufnahmevorrichtung mit den Merkmalen des Anspruchs 1.

Durch eine erfindungsgemäße Aufnahmevorrichtung kann im Inneren eines Fahrzeugs, insbesondere beispielsweise eines Kraftfahrzeugs, ein Anordnen von Gegenständen ermöglicht beziehungsweise bereitgestellt werden. Derartige Gegenstände können dabei bevorzugt beispielsweise Behälter für Getränke wie zum Beispiel Becher oder Flaschen sein. Der aufzunehmende Gegenstand wird dabei in einem Aufnahmeabschnitt der Aufnahmevorrichtung angeordnet, der dabei bevorzugt durch seine Form und/oder durch vorhandene Fixierelemente ein sicheres Aufnehmen des Gegenstands ermöglicht. So kann zum Beispiel der Aufnahmeabschnitt eine zumindest im Wesentlichen kreisförmige Öffnung aufweisen, in die ein Gegenstand, bevorzugt ein konischer Gegenstand, beispielsweise ein Becher, problemlos angeordnet und in dieser formschlüssig gehalten werden kann. Durch einen zusätzlichen Aufnahmeboden, der einen Aufnahmeraum des Aufnahmeabschnitts nach unten zumindest teilweise abschließt, kann eine Sicherheit eines Anordnens von Gegenständen im Aufnahmeabschnitt weiter gesteigert werden. Diese Aufnahmefunktionalität wird dabei durch den Aufnahmeabschnitt bereitgestellt, wenn dieser sich in seiner Aufnahmeposition befindet, in der er aus einem Grundkörper der Aufnahmevorrichtung hervorragt. Mit anderen Worten ragt somit der Aufnahmeabschnitt in seiner Aufnahmeposition in den Fahrzeuginnenraum hinein.

Entgegengesetzt dazu ist der Aufnahmeabschnitt in seiner Ruheposition im Grundkörper angeordnet. Bevorzugt ist dabei der Aufnahmeabschnitt in seiner Ruheposition vollständig im Inneren des Grundkörpers angeordnet, so dass der Aufnahmeabschnitt in dieser Position nicht und insbesondere auch nicht nur teilweise in den Fahrzeuginnenraum ragt. Bevorzugt kann dabei vorgesehen sein, dass der Aufnahmeabschnitt eine Verschlussoberfläche aufweist, die, bei einem Aufnahmeabschnitt in seiner Ruheposition, eine Oberfläche des Fahrzeuginnenraums, die an die Aufnahmevorrichtung angrenzt, bündig fortsetzt und/oder optisch an diese angepasst ausgebildet ist. Eine derartige Ausgestaltung wird dabei von einem Benutzer zumeist als angenehm und besonders hochwertig empfunden.

Um ein automatisiertes Bewegen des Aufnahmeabschnitts zumindest aus seiner Ruheposition in seine Aufnahmeposition bereitstellen zu können, weist eine erfindungsgemäße Aufnahmevorrichtung ferner eine Antriebseinheit auf, wobei die Antriebseinheit zum Erzeugen einer Antriebskraft ausgebildet ist. Die Antriebseinheit kann dabei beispielsweise ein oder mehrere Federelemente als Kraftspeicher aufweisen. Auch eine Ausgestaltung der Antriebseinheit mit einem oder mehreren beispielsweise elektrischen, pneumatischen oder hydraulischen Motoren ist denkbar. Dabei ist die Antriebseinheit derart mit dem Aufnahmeabschnitt mechanisch wirkverbunden, dass der Aufnahmeabschnitt mit der Antriebskraft beaufschlagt werden kann. Die Antriebskraft und/oder die mechanische Wirkverbindung sind dabei bevorzugt derart ausgebildet, dass ein Antreiben des Aufnahmeabschnitts durch die Antriebseinheit nur bei der Bewegung von der Ruheposition in die Aufnahmeposition erfolgt. Durch diese Antriebskraft kann somit der Aufnahmeabschnitt aus seiner Ruheposition über eine Zwischenposition in seine Aufnahmeposition bewegt werden. Die Zwischenposition wird somit mit anderen Worten vom Aufnahmeabschnitt zumindest kurzzeitig bei der Bewegung von der Ruheposition in die Aufnahmeposition eingenommen, wobei in der Zwischenposition der Aufnahmeabschnitt nicht mehr vollständig im Grundkörper angeordnet ist aber auch noch nicht völlig aus dem Grundkörper herausragt.

Erfindungsgemäß ist dabei vorgesehen, dass der Aufnahmeabschnitt durch die Antriebseinheit zum Bewegen aus der Ruheposition in die Zwischenposition mit einer ersten Antriebskraft beaufschlagt wird, und dass der Aufnahmeabschnitt durch die Antriebseinheit zum Bewegen aus der Zwischenposition in die Aufnahmeposition mit einer zweiten Antriebskraft beaufschlagt wird. Dabei ist wesentlich, dass die zweite Antriebskraft größer ist als die erste Antriebskraft. Dies kann beispielsweise dadurch eintreten, dass der Aufnahmeabschnitt aus seiner Ruheposition in seine Aufnahmeposition durch einen ersten Teil der Antriebseinheit, der einen Teil der Antriebskraft erzeugt, angetrieben wird und dass mit Erreichen der Zwischenposition ein zweiter Teil der Antriebseinheit, der ebenfalls einen weiteren Teil der Antriebskraft erzeugt, hinzukommt. Auf diese Weise ist die gesamte zweite Antriebskraft, die zwischen der Zwischenposition und der Aufnahmeposition auf den Aufnahmeabschnitt wirkt und die sich aus beiden Teilen zusammensetzt, automatisch größer als die erste Antriebskraft, die zwischen der Ruheposition und der Zwischenposition auf den Aufnahmeabschnitt wirkt. Ein derartiges Hinzukommen kann dabei beispielsweise durch Abklappen eines Aufnahmebodens durch ein Federelement erzeugt werden, wobei dieses Abklappen mit Erreichen der Zwischenposition durch den Aufnahmeabschnitt beginnt und wobei sich der Aufnahmeboden, zumindest mittelbar, beim Abklappen bevorzugt am Grundkörper abstützt. Ohne weitere Maßnahmen oder Vorrichtungen könnte dies, insbesondere die größere zweite Antriebskraft, zu einer Erhöhung der Geschwindigkeit der Bewegung des Aufnahmeabschnitts zwischen der Zwischenposition und der Aufnahmeposition führen. Ein Herausschnellen des Aufnahmeabschnitts in seine Aufnahmeposition, das allein für sich von einem Benutzer oftmals als unangenehm und minderwertig empfunden wird, kann dadurch hervorgerufen werden. Auch wird der Aufnahmeabschnitt beim Erreichen der Aufnahmeposition dann abrupt gestoppt, wodurch neben einer Geräuschentwicklung auch eine hohe Materialbelastung und damit eine verminderte Lebensdauer beziehungsweise eine hohe Wartungsanfälligkeit hervorgerufen werden könnte.

Um dies zu vermeiden weist eine erfindungsgemäße Aufnahmevorrichtung eine Dämpfungsvorrichtung auf, die zum Beaufschlagen des Aufnahmeabschnitts mit einer Dämpfungskraft entgegen der Antriebskraft ausgebildet ist. Dabei wird durch die Dämpfungsvorrichtung der Aufnahmeabschnitt erfindungsgemäß mit einer ersten Dämpfungskraft entgegen der ersten Antriebskraft und mit einer zweiten Dämpfungskraft entgegen der zweiten Antriebskraft beaufschlagt. Somit wirken sowohl die jeweilige Antriebskraft als auch die jeweilige Dämpfungskraft auf den Aufnahmeabschnitt, wobei die Kräfte einander entgegenwirken. Dabei ist bevorzugt die jeweilige Antriebskraft größer als die jeweilige Dämpfungskraft, wodurch die Bewegung des Aufnahmeabschnitts durch das Wirken der jeweiligen Dämpfungskraft nicht vollständig gestoppt wird. Eine resultierende Gesamtkraft ist somit vermindert, wobei insgesamt dennoch der Aufnahmeabschnitt für seine Bewegung angetrieben wird. So ergibt sich beispielsweise bei einer antiparallelen Ausgestaltung der jeweiligen Antriebskraft und der jeweiligen Dämpfungskraft die resultierende Gesamtkraft aus der Differenz der beiden Kräfte. Antiparallel im Sinne der Erfindung bedeutet dabei insbesondere, dass die entsprechenden Kräfte zwar parallel zueinander angeordnet sind, wobei aber ihre Richtungen einander entgegengesetzt ausgerichtet sind.

Erfindungswesentlich ist dabei vorgesehen, dass die zweite Dämpfungskraft größer ist als die erste Dämpfungskraft. Damit kann berücksichtigt werden, dass auch die zweite Antriebskraft größer ist als die erste Antriebskraft. Die Bewegung des Aufnahmeabschnitts von der Zwischenposition in die Aufnahmeposition, die durch Beaufschlagung mit der stärkeren zweiten Antriebskraft hervorgerufen wird, wird somit durch die zweite, ebenfalls stärkere Dämpfungskraft stärker gedämpft als die Bewegung des Aufnahmeabschnitts von der Ruheposition in die Zwischenposition, die durch Beaufschlagung mit der schwächeren ersten Antriebskraft hervorgerufen wird und die durch die erste, ebenfalls schwächere Dämpfungskraft gedämpft wird. Ein insgesamt gleichmäßigeres Ausfahren des Aufnahmeabschnitts über die gesamte Bewegung, also von der Ruheposition bis in die Aufnahmeposition kann dadurch ermöglicht werden. Ein Herausschnellen des Aufnahmeabschnitts hin zum Ende dieser Bewegung, wie es oben zusammen mit den damit einhergehenden Nachteilen beschrieben ist, kann dadurch sicher vermieden werden. Insgesamt kann somit eine Aufnahmevorrichtung bereitgestellt werden, die eine hohe Lebensdauer und eine geringe Wartungsanfälligkeit aufweist und darüber hinaus durch einen Benutzer als besonders angenehm und wertig empfunden wird.

Ferner kann bei einer erfindungsgemäßen Aufnahmevorrichtung vorgesehen sein, dass die Antriebseinheit ein erstes Antriebselement und ein zweites Antriebselement, insbesondere ein erstes und ein zweites Federelement, aufweist, wobei das erste Antriebselement den Aufnahmeabschnitt zumindest mit der ersten Antriebskraft beaufschlägt und das zweite Antriebselement den Aufnahmeabschnitt mit der zweiten Antriebskraft beaufschlägt. Durch eine derartige zweiteilige Ausgestaltung der Antriebseinheit mit zwei getrennten Antriebselementen kann besonders einfach bereitgestellt werden, dass die erste und die zweite Antriebskraft unterschiedlich groß sind und insbesondere für unterschiedliche Abschnitte der Bewegung des Aufnahmeabschnitts von der Ruheposition über die Zwischenposition in die Aufnahmeposition wirken. Besonders bevorzugt können dabei die Antriebselemente Federelemente umfassen, beispielsweise Rollfedern oder Spiralfedern. Auch kann vorgesehen sein, dass das erste Antriebselement den Aufnahmeabschnitt auch zwischen der Zwischenposition und der Aufnahmeposition mit einer Antriebskraft beaufschlagt, die dann zusammen mit der dann zusätzlich wirkenden Kraft des zweiten Antriebselements die zweite Antriebskraft bildet. Auch dadurch kann besonders einfach sichergestellt werden, dass die zweite Antriebskraft größer ist als die erste Antriebskraft. Besonders bevorzugt kann bei einer erfindungsgemäßen Aufnahmevorrichtung vorgesehen sein, dass die zweite Dämpfungskraft die Kraftzunahme von der ersten Antriebskraft zur zweiten Antriebskraft kompensiert oder zumindest im Wesentlichen kompensiert. Wie oben bereits ausgeführt, wird durch die Dämpfungskraft, die der Antriebskraft entgegen wirkt, eine insgesamt resultierende Kraft, mit der der Aufnahmeabschnitt zur Erzeugung einer Bewegung beaufschlagt wird, reduziert. Durch eine zweite Dämpfungskraft, welche die Kraftzunahme von der ersten Antriebskraft zur zweiten Antriebskraft kompensiert oder zumindest im Wesentlichen kompensiert kann nun erreicht werden, dass insbesondere diese resultierende Kraft, mit der der Aufnahmeabschnitt zur Erzeugung einer Bewegung beaufschlagt wird über die gesamte Bewegung des Aufnahmeabschnitts, also von der Ruheposition bis in die Aufnahmeposition bevorzugt konstant oder zumindest im Wesentlichen konstant bleibt. Insbesondere an der Zwischenposition gibt es durch diese Ausgestaltung der zweiten Dämpfungskraft keinen sprunghaften Anstieg der resultierenden Kraft. Dabei kann eine Größe der zweiten Dämpfungskraft auch derart gewählt werden, dass dabei eine mögliche erste Dämpfungskraft berücksichtigt wird. Ein besonders gleichmäßiges Ausfahren des Aufnahmeabschnitts aus der Ruheposition bis in die Aufnahmeposition kann dadurch bereitgestellt werden.

Ferner ist die erfindungsgemäße Aufnahmevorrichtung dahingehend ausgebildet, dass die Dämpfungsvorrichtung zweiteilig ausgebildet ist und ein Bewegelement zum Folgen einer Bewegung des Aufnahmeabschnitts sowie ein Dämpfelement zur Erzeugung der ersten Dämpfungskraft und/oder zweiten Dämpfungskraft aufweist, wobei das Bewegelement am Aufnahmeabschnitt angeordnet ist und dadurch einer Bewegung des Aufnahmeabschnitts folgt, und wobei das Dämpfelement im Grundkörper angeordnet ist und derart mit dem Bewegelement mechanisch wirkverbunden ist, dass das Dämpfelement den Aufnahmeabschnitt mit der erzeugten ersten und/oder zweiten Dämpfungskraft beaufschlägt. Durch eine derartige zweiteilig ausgestaltete Dämpfungsvorrichtung kann diese besonders einfach ausgebildet sein. So ist das Dämpfelement im Grundkörper angeordnet, insbesondere ortsfest im Grundkörper angeordnet. Dadurch kann beispielsweise der Grundkörper zum Abstützen der Dämpfungskraft verwendet werden. Auch ein Mitbewegen des Dämpfelements mit dem Aufnahmeabschnitt kann dadurch vermieden werden. Einschränkungen bei der Planung und Konstruktion des Dämpfelements, die ein derartiges Mitbewegen verursachen würde, können so vermieden werden. Eine durch die Anordnung des Dämpfelements im Grundkörper ermöglichte Ausgestaltung des Dämpfelements kann dabei beispielsweise ein Flügelrad umfassen, das sich zumindest abschnittsweise in einem Dämpfungsfluid, beispielsweise in einem Fett und/oder in einem Öl und/oder in einer silikonhaltigen Flüssigkeit, rotiert. Ein Mitbewegen eines derart aufgebauten Dämpfelements mit dem Aufnahmeabschnitt wäre mit großen konstruktiven Problemen verbunden und darüber hinaus fehleranfällig und wartungsintensiv. Das Bewegelement, das am Aufnahmeabschnitt angeordnet ist, kann hingegen mechanisch einfach aufgebaut sein, wodurch sich konstruktive Einschränkungen bedingt durch das Mitbewegen für das Bewegelement nicht ergeben. Wesentlich ist dabei, dass das Bewegelement der Bewegung des Aufnahmeabschnitts folgt. Dadurch kann zum einen die Position des Aufnahmeabschnitts durch das Bewegelement nachgebildet werden. Zum anderen kann dadurch und durch die mechanische Wirkverbindung zwischen dem Bewegelement und dem Dämpfelement der Aufnahmeabschnitt mit der durch das Dämpfelement erzeugten ersten und/oder zweiten Dämpfkraft beaufschlagt werden, unabhängig von der aktuellen Position des Aufnahmeabschnitts. Eine besonders einfache und gleichzeitig flexible Ausgestaltung einer erfindungsgemäßen Aufnahmevorrichtung kann somit auf diese Weise bereitgestellt werden.

Die erfindungsgemäße Aufnahmevorrichtung ist dahingehend weiterentwickelt, dass das Bewegelement eine Zahnstange ist und das Dämpfelement ein Zahnrad umfasst, wobei eine Länge der Zahnstange einem Positionsabstand zwischen der Zwischenposition und der Aufnahmeposition angepasst ist und wobei zur Herstellung der mechanischen Wirkverbindung zwischen dem Bewegelement und dem Dämpfelement das Zahnrad bei einem Aufnahmeabschnitt, der sich zwischen der Zwischenposition und der Aufnahmeposition befindet, in die Zahnstange kämmend eingreift. Eine Zahnstange als Bewegelement und ein Dämpfelement, das ein Zahnrad umfasst, stellten dabei eine besonders einfache Ausgestaltung einer derartigen zweiteiligen Dämpfungsvorrichtung dar. Dabei kann durch die erfindungsgemäße Ausgestaltung der Zahnstange und des Zahnrads derart, dass das Zahnrad bei einem Aufnahmeabschnitt, der sich zwischen der Zwischenposition und der Aufnahmeposition befindet, zur Herstellung der Wirkverbindung in die Zahnstange kämmend eingreift, bereitgestellt werden, dass durch die Dämpfungsvorrichtung insbesondere die zweite Dämpfungskraft erzeugt und damit der Aufnahmeabschnitt beaufschlagt wird. Ferner kann durch die erfindungsgemäße Ausgestaltung der Zahnstange mit einer Länge, die an einen Positionsabstand zwischen der Zwischenposition und der Aufnahmeposition angepasst ist, auf besonders einfache Art und Weise sichergestellt werden, dass diese zweite Dämpfungskraft auch über die gesamte Bewegung des Aufnahmeabschnitts von der Zwischenposition bis zur Aufnahmeposition erzeugt und der Aufnahmeabschnitt damit beaufschlagt werden kann.

Bevorzugt kann eine erfindungsgemäße Aufnahmevorrichtung dahingehend weiterentwickelt sein, dass das Zahnrad spitz zulaufende oder zumindest im Wesentlichen spitz zulaufende Mitnehmerzähne aufweist und/oder dass das Zahnrad Mitnehmerzähne aufweist, die an ihrer Basis breiter sind als ein umläufiger Abstand benachbarter Mitnehmerzähne. Spitz zulaufend im Sinne der Erfindung bedeutet dabei insbesondere, dass die Mitnehmerzähne an ihren radialen Enden kein Plateau aufweisen. Die Flanken der Mitnehmerzähne bilden an den radialen Enden der Mitnehmerzähne bevorzugt einen spitzen Winkel, also einen Winkel kleiner als 90°. Dabei kann die Kante am radialen Ende eines Mitnehmerzahns auch eine Abrundung aufweisen. Durch diese Ausgestaltung kann vermieden werden, dass sich das Zahnrad des Dämpfelements und die Zahnstange gegeneinander verkanten. Dies ist insbesondere in Ausgestaltungen einer erfindungsgemäßen Aufnahmevorrichtung von Bedeutung, bei denen das Zahnrad nicht über die gesamte Bewegung des Aufnahmeabschnitts von der Ruheposition bis in die Aufnahmeposition kämmend in die Zahnstange eingreift, sondern dieses Eingreifen während der Bewegung erst beginnt, nämlich wenn sich der Aufnahmeabschnitt in der Zwischenposition befindet.

Ein Verkanten des Zahnrads und der Zahnstange gegeneinander bei diesem Beginnen des kämmenden Eingreifens kann durch die erfindungsgemäße Ausgestaltung der Mitnehmerzähne vermieden oder zumindest erschwert werden. Eine weitere Maßnahme zur Vermeidung beziehungsweise Erschwerung eines derartigen Verkantens stellen Mitnehmerzähne dar, die an ihrer Basis breiter sind als ein umlaufender Abstand benachbarter Mitnehmerzähne. Mit anderen Worten ist der Abstand zwischen den einzelnen Mitnehmerzähnen kleiner, als die Erstreckung der Mitnehmerzähne entlang des Umfangs des Zahnrads bei gleichem Radius. Auch durch diese, insbesondere im Vergleich zu üblichen Zahnrädern, breitere Basis der Mitnehmerzähne kann ein Verkanten des Zahnrads und der Zahnstange gegeneinander verhindert oder zumindest erschwert werden.

Ferner kann gemäß einer Weiterentwicklung bei einer erfindungsgemäßen Aufnahmevorrichtung vorgesehen sein, dass die Zahnstange einen Hauptabschnitt mit einer Vielzahl von gleichartigen Zähnen und einen Einlaufabschnitt mit zumindest einem Einlaufzahn aufweist, wobei der Einlaufabschnitt an einem Ende der Zahnstange angeordnet ist, welches bei einem Aufnahmeabschnitt in der Zwischenposition oder zumindest im Wesentlichen in der Zwischenposition das Zahnrad kontaktiert und wobei der zumindest eine Einlaufzahn zum Herstellen der mechanischen Wirkverbindung zwischen der Zahnstange und dem Zahnrad ausgebildet ist. Zahnstangen weisen zumeist eine Vielzahl von gleichartigen Zähnen auf. Dadurch kann sichergestellt werden, dass einem Zahnrad, das kämmend in die Zahnstange eingreift, unabhängig von der Position dieses Eingriffs in Bezug auf die Zahnstange immer eine gleiche Eingriffsumgebung bereitgestellt werden kann. Der Hauptabschnitt einer Zahnstange einer erfindungsgemäßen Aufnahmevorrichtung kann genau eine derartige Vielzahl von gleichartigen Zähnen aufweisen. Darüber hinaus ist eine derartige Zahnstange vorteilhaft dahingehend ausgebildet, dass ihre Länge einem Positionsabstand zwischen der Zwischenposition und der Aufnahmeposition angepasst ist. mit anderen Worten erstreckt sich eine derartig ausgebildete Zahnstange nicht über die gesamte Strecke, die vom Aufnahmeabschnitt bei seiner Ausfahrbewegung überstrichen wird. Bevorzugt ist dabei, dass das Zahnrad bei einem Aufnahmeabschnitt zwischen der Ruheposition und der Zwischenposition nicht kämmend in die Zahnstange eingreift, zwischen der Zwischenposition und der Aufnahmeposition hingegen schon. Dies bringt den oben bereits beschriebenen Vorteil mit sich, dass insbesondere die zweite Dämpfungskraft besonders einfach bereitgestellt und insbesondere größer als die erste Dämpfungskraft werden kann. Wesentlich dafür ist dabei, dass der kämmende Eingriff des Zahnrads in die Zahnstange beginnt, wenn sich der Aufnahmeabschnitt bei seiner Ausfahrbewegung in der Zwischenposition oder zumindest im Wesentlichen in der Zwischenposition befindet. Um diesen Beginn des kämmenden Eingreifens zu erleichtern, kann eine erfindungsgemäße Zahnstange bevorzugt einen Einlaufabschnitt mit zumindest einem Einlaufzahn aufweisen.

Dabei ist der Einlaufabschnitt und damit der zumindest eine Einlaufzahn an demjenigen Ende der Zahnstange angeordnet, welches bei einem Aufnahmeabschnitt in der Zwischenposition oder zumindest im Wesentlichen in der Zwischenposition nahe dem Zahnrad angeordnet ist oder dieses bereits kontaktiert. Der zumindest eine Einlaufzahn ist dabei derart ausgestaltet, dass er zum Herstellen der mechanischen Wirkverbindung zwischen der Zahnstange und dem Zahnrad ausgebildet ist. Ein Herstellen im Sinne der Erfindung umfasst dabei insbesondere, dass dabei der Beginn des kämmenden Eingriffs des Zahnrads erleichtert wird. Dies kann beispielsweise dadurch erreicht werden, dass der zumindest eine Einlaufzahn eine spezielle Geometrie und/oder Form aufweist, die von den Zähnen im Hauptabschnitt unterschiedlich ist. So kann beispielsweise der zumindest eine Einlaufzahn insgesamt kleiner ausgebildet sein als die Zähne im Hauptabschnitt. Auch eine spezielle Oberflächenbeschaffenheit, die zum Beispiel besonders glatt ausgebildet sein kann und beispielsweise durch eine geeignete Beschichtung bereitgestellt werden kann, kann alternativ oder zusätzlich bei dem zumindest einen Einlaufzahn vorgesehen sein. Darüber hinaus kann ferner für den zumindest einen Einlaufzahn vorgesehen sein, diesen aus einem anderen Material, beispielsweise einem weicheren Material als die Zähne im Hauptabschnitt, anzufertigen. In allen Ausgestaltungen des Einlaufabschnitts beziehungsweise des zumindest einen Einlaufzahns kann erreicht werden, dass insbesondere ein Verkanten und/oder Verklemmen des Zahnrads an der Zahnstange verhindert wird, insbesondere bei einem Beginn des kämmenden Eingreifens des Zahnrads in die Zahnstange. Ein insgesamt erleichterter und sicherer Beginn des kämmenden Eingreifens des Zahnrads in die Zahnstange kann dadurch ermöglicht werden.

Besonders bevorzugt kann dabei eine erfindungsgemäße Aufnahmevorrichtung dahingehend weiterentwickelt sein, dass der zumindest eine Einlaufzahn zumindest eines der folgenden Merkmale aufweist:
- dass der zumindest eine Einlaufzahn eine geringere Höhe aufweist als die Zähne im Hauptabschnitt der Zahnstange,
- dass der zumindest eine Einlaufzahn asymmetrisch ausgebildet ist, wobei eine dem Hauptabschnitt zugewandte erste Flanke des zumindest einen Einlaufzahns flacher ist, als eine dem Hauptabschnitt abgewandte zweite Flanke,
- dass ein Zahnabstand des zumindest einen Einlaufzahns zu einem benachbarten Zahn im Hauptabschnitt größer ist als ein Abstand benachbarter Zähne des Hauptabschnitts.

Dabei ist diese Liste nicht abgeschlossen, so dass der zumindest eine Einlaufzahn auch weitere Merkmale aufweisen kann, die insbesondere einen Beginn des kämmenden Eingreifens des Zahnrads in die Zahnstange erleichtern. Allen in der Liste aufgeführten Merkmalen ist dabei gleich, dass durch sie ein Verkanten und/oder Verklemmen des Zahnrads an der Zahnstange verhindert wird. Bevorzugt weist der zumindest eine Einlaufzahn mehrere dieser Merkmale, besonders bevorzugt alle Merkmale auf. So kann beispielsweise durch eine geringere Höhe des Einlaufzahns im Vergleich zu den Zähnen im Hauptabschnitt erreicht werden, dass das Zahnrad durch diesen kleineren Zahn bereits in eine Position gedreht wird, in der ein Verkanten und/oder Verklemmen des Zahnrads an einem der Zähne des Hauptabschnitts der Zahnstange nicht möglich oder zumindest unwahrscheinlich ist. Gleiches kann durch eine asymmetrische Ausgestaltung der Form des zumindest einen Einlaufzahns erreicht werden. Dabei sind die Flanken, also die seitlichen Begrenzungsflächen, des zumindest einen Einlaufzahns unterschiedlich steil ausgebildet, wobei insbesondere die dem Hauptabschnitt zugewandte Flanke flacher und die dem Hauptabschnitt abgewandte Flanke steiler ist im Vergleich zu den Zähnen im Hauptabschnitt. Auf diese Weise wird das Zahnrad beim Beginn des kämmenden Eingreifens zuerst von der steileren Flanke kontaktiert und weitergedreht. Durch diese steilere Flanke ist auch ein Kontaktwinkel zwischen dem Zahnrad und dem zumindest einen Einlaufzahn größer, wodurch wiederum ein Verkanten und/oder Verklemmen des Zahnrads beim erstmaligen Kontakt mit dem zumindest einen Einlaufzahn und damit mit der Zahnstange verhindert oder zumindest erschwert werden kann. Durch den größeren Zahnabstand zwischen dem zumindest einen Einlaufzahn und dem ersten Zahn des Hauptabschnitts kann erreicht werden, dass ein Verkanten und/oder Verklemmen des Zahnrads beim Übergang vom Einlaufabschnitt zum Hauptabschnitt auftritt. Durch den zumindest einen Einlaufzahn wird das Zahnrad in eine Position gebracht, in der ein sofortiger Beginn des kämmenden Eingreifens in die Zähne des Hauptabschnitts möglich ist. Durch den größeren Zahnabstand zwischen dem zumindest einen Einlaufahn und dem benachbarten ersten Zahn des Hauptabschnitts kann besonders sicher bereitgestellt werden, dass das Zahnrad diese Position auch tatsächlich einnimmt. Insgesamt kann durch einen Einlaufabschnitt mit zumindest einem Einlaufzahn, der ein oder mehrere dieser Merkmale aufweist, bereitgestellt werden, dass ein Verkanten und/oder Verklemmen des Zahnrads an der Zahnstange, insbesondere sowohl beim eigentlichen Beginn des kämmenden Eingreifens beim erstmaligen Kontaktieren des Zahnrads am Einlaufabschnitt als auch beim Übergang vom Einlaufabschnitt zum Hauptabschnitt, verhindert oder zumindest erschwert wird.

Gemäß einer weiteren bevorzugten Weiterentwicklung kann ferner bei einer erfindungsgemäßen Aufnahmevorrichtung vorgesehen sein, dass der Einlaufabschnitt zwei oder mehr Einlaufzähne aufweist. Besonders bevorzugt kann dabei der Einlaufabschnitt zwei Einlaufzähne aufweisen. Sämtliche Merkmale und Vorteile, die oben zu einem Einlaufzahn beschrieben worden sind, können dabei auch mit zwei oder mehr Einlaufzähnen ermöglicht und bereitgestellt werden. Insgesamt kann dabei durch das Vorhandensein von zwei oder mehr Einlaufzähnen noch einfacher und sicherer bereitgestellt werden, dass das Zahnrad beim Übergang vom Einlaufabschnitt zum Hauptabschnitt der Zahnstange in eine Position gebracht insbesondere gedreht ist, durch die ein problemloser Beginn des kämmenden Eingreifens des Zahnrads in die Zähne des Hauptabschnitts ohne Verkanten und/oder Verklemmen ermöglicht und sichergestellt werden kann.

Ferner kann eine erfindungsgemäße Aufnahmevorrichtung dahingehend weiterentwickelt sein, dass die Einlaufzähne eine zueinander ähnliche Geometrie aufweisen. Eine ähnliche Geometrie im Sinne der Erfindung bedeutet dabei insbesondere, dass die Geometrien der einzelnen Einlaufzähne, analog zu ähnlichen Dreiecken, bis auf eine verschiedene Skalierung gleich sind. So können beispielsweise die Flanken der einzelnen Einlaufzähne unter gleichen Winkeln angeordnet sein und die Einlaufzähne sich untereinander nur durch eine allgemeine Größe unterscheiden. Eine besonders einfache Ausgestaltung einer Aufnahmevorrichtung kann dadurch bereitgestellt werden, da die Geometrie der Einlaufzähne nur einmal festgelegt werden muss.

Darüber hinaus kann bei einer Weiterentwicklung einer erfindungsgemäßen Aufnahmevorrichtung vorgesehen sein, dass die Höhe der einzelnen Einlaufzähne im Einlaufabschnitt in Richtung des Hauptabschnitts zunimmt, insbesondere gleichmäßig zunimmt. Insbesondere bei mehr als zwei Einlaufzähnen kann dabei ferner bevorzugt vorgesehen sein, dass die Höhe kontinuierlich zunimmt. Gleichmäßig im Sinne der Erfindung wird dabei dahingehend verstanden, dass ein Zuwachs an Höhe bei verschiedenen Paaren von benachbarten Einlaufzähnen gleich ist. Durch ein derartiges Zunehmen der Höhe kann erreicht werden, dass sich die Höhe der Einlaufzähne immer mehr einer Höhe der Zähne des Hauptabschnitts annähert, je näher der jeweilige Einlaufzahn im Einlaufabschnitt zum Hauptabschnitt angeordnet ist. Ein besonders einfacher und fließender Übergang, insbesondere ohne ein Verkanten und/oder Verklemmen des Zahnrads an der Zahnstange, vom Einlaufabschnitt zum Hauptabschnitt kann dadurch für das kämmend eingreifende Zahnrad bereitgestellt werden.

Alternativ oder zusätzlich kann eine erfindungsgemäße Aufnahmevorrichtung ferner dahingehend weiterentwickelt sein, dass ein Zahnabstand der einzelnen Einlaufzähne im Einlaufabschnitt in Richtung des Hauptabschnitts abnimmt, insbesondere gleichmäßig abnimmt. Insbesondere bei mehr als zwei Einlaufzähnen kann dabei ferner bevorzugt vorgesehen sein, dass der Zahnabstand kontinuierlich abnimmt. Gleichmäßig im Sinne der Erfindung wird dabei wiederum dahingehend verstanden, dass eine Abnahme des Zahnabstands bei verschiedenen Paaren von benachbarten Einlaufzähnen gleich ist. Durch eine derartige Abnahme des Zahnabstands kann erreicht werden, dass sich der Zahnabstand benachbarter Einlaufzähne immer mehr einem Zahnabstand der Zähne des Hauptabschnitts annähert, je näher das jeweilige Paar an Einlaufzähnen im Einlaufabschnitt zum Hauptabschnitt angeordnet ist. Auch dadurch kann für das kämmend eingreifende Zahnrad ein besonders einfacher und fließender Übergang vom Einlaufabschnitt zum Hauptabschnitt bereitgestellt werden, insbesondere ohne ein Verkanten und/oder Verklemmen des Zahnrads an der Zahnstange.

Ferner kann bei einer erfindungsgemäßen Aufnahmevorrichtung vorgesehen sein, dass die Aufnahmevorrichtung eine Parallellaufeinheit aufweist, wobei die Parallellaufeinheit eine erste Parallelzahnstange und eine zweite Parallelzahnstange, die parallel zueinander und parallel zur ersten Antriebskraft und zweiten Antriebskraft am Aufnahmeabschnitt angeordnet sind, und ferner ein erstes Parallelzahnrad und ein zweites Parallelzahnrad aufweist, wobei die Parallelzahnräder durch eine im Grundkörper gelagerte Achse verbunden sind und das erste Parallelzahnrad kämmend in die erste Parallelzahnstange eingreift und das zweite Parallelzahnrad kämmend in die zweite Parallelzahnstange eingreift, und wobei ferner die Zahnstange der der Dämpfungsvorrichtung einstückig mit der ersten Parallelzahnstange ausgebildet ist. Durch eine derartige Parallellaufeinheit kann sichergestellt werden, dass der Aufnahmeabschnitt gerade und ohne Verkanten und/oder Verkippen aus dem Grundkörper ausgefahren werden kann. Dafür weist die Parallellaufeinheit zwei Zahnstangen auf, die parallel zueinander am Aufnahmeabschnitt angeordnet sind. Ferner sind die beiden Parallelzahnstangen parallel zur ersten und zur zweiten Antriebskraft ausgerichtet. Dadurch kann erreicht werden, dass die Ausfahrbewegung des Aufnahmeabschnitts und die beiden Parallelzahnstangen ebenfalls parallel zueinander verlaufen. In beide Parallelzahnstangen greift jeweils kämmend ein Parallelzahnrad ein, in die erste Parallelzahnstange das erste Parallelzahnrad und in die zweite Zahnstange das zweite Parallelzahnrad. Die beiden Parallelzahnräder sind durch eine gemeinsame Achse miteinander verbunden, die im Grundkörper gelagert ist. Dadurch kann sichergestellt werden, dass sich die beiden Zahnräder nur gleichzeitig und insbesondere synchron und damit nur mit gleicher Drehgeschwindigkeit rotieren können. Über den kämmenden Eingriff überträgt sich diese Gleichförmigkeit auch auf die jeweilige Parallelzahnstange, so dass die resultierenden linearen Bewegungen der beiden Parallelzahnräder ebenfalls gleichzeitig und insbesondere mit gleicher Geschwindigkeit erfolgen. Durch die Anordnung der beiden Parallelzahnstangen am Aufnahmeabschnitt kann somit sichergestellt werden, dass dieser gleichmäßig und ohne Verkanten und/oder Verkippen aus dem Grundkörper ausgefahren werden kann. Erfindungsgemäß ist dabei vorgesehen, dass die Zahnstange der der Dämpfungsvorrichtung einstückig mit der ersten Parallelzahnstange ausgebildet ist. Die Zahnstange ist mit anderen Worten in die erste Parallelzahnstange integriert. Auf diese Weise kann besonders einfach sichergestellt werden, dass die Zahnstange als Bewegelement der Bewegung des Aufnahmeabschnitts folgt. Ferner kann dadurch ein konstruktiver Aufbau einer erfindungsgemäßen Aufnahmevorrichtung vereinfacht werden, da durch die Integration der Zahnstange in die Parallelzahnstange zusätzliche Bauteile, beispielsweise für eine Befestigung der Zahnstange am Aufnahmeabschnitt, eingespart werden können.

Bevorzugt kann eine erfindungsgemäße Aufnahmevorrichtung dahingehend weiterentwickelt sein, dass die Zahnstange einen Hauptabschnitt mit einer Vielzahl von gleichartigen Zähnen aufweist, wobei die Zähne im Hauptabschnitt und die Zähne der ersten Parallelzahnstange gleich geformt ausgebildet sind und/oder fluchtend zueinander angeordnet sind. Auf diese Weise kann erreicht werden, dass der Hauptabschnitt der Zahnstange und die erste Parallelzahnstange gleich oder zumindest ähnlich ausgeformt sind. Insbesondere bei einer Ausführungsform, bei der sowohl gleich geformte als auch fluchtend zueinander angeordnete Zähne im Hauptabschnitt der Zahnstange und bei der ersten Parallelzahnstange vorhanden sind, können diese Zähne sogar einteilig mit insbesondere durchgehenden Flanken ausgebildet sein. Dies stellt eine weitere konstruktive Vereinfachung einer erfindungsgemäßen Aufnahmevorrichtung dar.

Ebenfalls Gegenstand der vorliegenden Erfindung ist gemäß eines zweiten Aspekts der Erfindung ein Verfahren zum Dämpfen einer Bewegung eines Aufnahmeabschnitts einer Aufnahmevorrichtung für einen Fahrzeuginnenraum nach dem ersten Aspekt der Erfindung, wobei durch die Dämpfungsvorrichtung eine Bewegung des Aufnahmeabschnitts aus der Zwischenposition in die Aufnahmeposition stärker gedämpft wird als eine Bewegung des Aufnahmeabschnitts aus der Ruheposition in die Zwischenposition. Aufgrund der Verwendung einer erfindungsgemäßen Aufnahmevorrichtung nach dem ersten Aspekt der Erfindung bringt ein erfindungsgemäßes Verfahren die gleichen Vorteile mit sich, wie sie ausführlich mit Bezug auf eine erfindungsgemäße Aufnahmevorrichtung nach dem ersten Aspekt der Erfindung erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Elemente mit gleicher Funktion und Wirkungsweise sind dabei in den Figuren jeweils mit denselben Bezugszeichen versehen. Es zeigen schematisch:
- Fig. 1: drei Ansichten einer erfindungsgemäßen Aufnahmevorrichtung mit einem Aufnahmeabschnitt in seiner Ruheposition, seiner Zwischenposition und seiner Aufnahmeposition
- Fig. 2: eine Teilansicht einer erfindungsgemäßen Aufnahmevorrichtung,
- Fig. 3: eine erste Parallelzahnstange und eine daran angeordnete Zahnstange,
- Fig. 4: eine Detailansicht der in Fig. 3 gezeigten Parallelzahnstange, und
- Fig. 5: ein Parallelzahnrand und ein Zahnrad einer Dämpfungsvorrichtung.

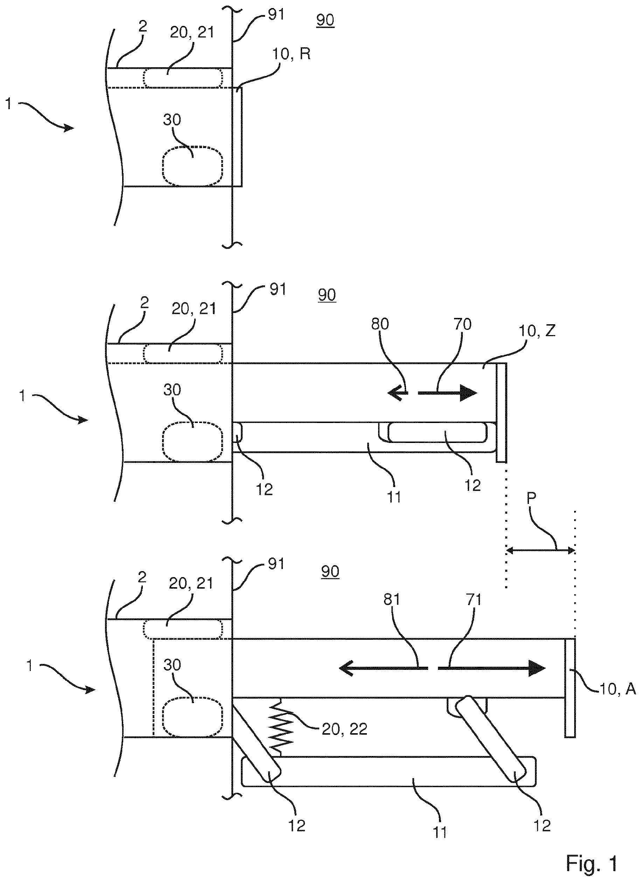

Fig. 1 zeigt drei Ansichten einer erfindungsgemäßen Aufnahmevorrichtung 1. Die verschiedenen Ansichten unterscheiden sich dabei insbesondere in der Stellung des Aufnahmeabschnitts 10 der Aufnahmevorrichtung 1. Der Aufnahmeabschnitt 10 ist dabei zwischen einer Ruheposition R (oberste Ansicht) über eine Zwischenposition Z (mittlere Ansicht) in eine Aufnahmeposition A (unterste Ansicht) verfahrbar im Grundkörper 2 gelagert. Insbesondere in der Aufnahmeposition A, abgebildet in der untersten Ansicht, ragt der Aufnahmeabschnitt 10 aus dem Grundkörper 2 hervor und Gegenstände, beispielsweise Getränkebehälter, können in ihm angeordnet beziehungsweise durch ihn aufgenommen werden.

In der obersten Ansicht ist der Aufnahmeabschnitt 10 in seiner Ruheposition R abgebildet, in der er im Wesentlichen im Inneren des Grundkörpers 2 der Aufnahmevorrichtung 1 angeordnet ist. Vom Fahrzeuginnenraum 90 aus ist in dieser Stellung des Aufnahmeabschnitts 10 lediglich eine als Sichtblende ausgebildete Verschlussoberfläche sichtbar, die sich in dieser Ausgestaltungsform leicht erhaben von einer Oberfläche 91 im Fahrzeuginnenraum 90 abgrenzt. Alternativ ist auch eine bündige Ausgestaltung der Sichtblende mit der Oberfläche 91 denkbar. Die erfindungsgemäße Aufnahmevorrichtung 1 weist eine Antriebseinheit 20 auf, die insbesondere zweigeteilt ausgebildet sein kann und dabei ein erstes Antriebselement 21 und ein zweites Antriebselement 22 umfassen kann. Durch diese Antriebseinheit 20 kann der Aufnahmeabschnitt 10 mit einer ersten 70 und einer zweiten Antriebskraft 71 beaufschlagt werden, wodurch der Aufnahmeabschnitt 10 aus seiner Ruheposition R über die Zwischenposition Z in die Aufnahmeposition A bewegt wird.

In dieser Ausgestaltungsform einer erfindungsgemäßen Aufnahmevorrichtung 1 ist dabei ein erstes Antriebselement 21 vorgesehen, dass über diese gesamte Bewegung den Aufnahmeabschnitt 10 mit einer Antriebskraft beaufschlägt. Das erste Antriebselement 21 kann dabei beispielsweise als ein Federelement, zum Beispiel als eine Rollfeder, ausgebildet sein. Zwischen der Ruheposition R und der Zwischenposition Z bildet diese Antriebskraft des ersten Antriebselements 21 die erste Antriebskraft 71. Ab der Zwischenposition Z fängt in dieser Ausgestaltungsform einer erfindungsgemäßen Aufnahmevorrichtung 1 ein Aufnahmeboden 11 an, nach unten abzuklappen. Dafür ist der Aufnahmeboden 11 über Stege 12 am Aufnahmeabschnitt 10 gelagert angeordnet. Die Abklappbewegung wird dabei durch ein zweites Antriebselement 22 der Antriebseinheit 20 angetrieben. Auch das zweite Antriebselement 22 kann ein Federelement umfassen, beispielsweise wie abgebildet eine Spiralfeder. Durch das Abstützen eines der Stege 12 am Grundkörper 2 ergibt sich dabei auch eine Kraftkomponente der Antriebskraft des zweiten Antriebselements 22, das in Richtung der Bewegung des Aufnahmeabschnitts 10 orientiert ist. Zusammen mit der Antriebskraft des ersten Antriebselements 21 bildet diese Kraftkomponente die zweite Antriebskraft 71, mit der der Aufnahmeabschnitt 10 zwischen der Zwischenposition Z und der Aufnahmeposition A beaufschlagt wird. In anderen, alternativen Ausgestaltungsformen einer erfindungsgemäßen Aufnahmevorrichtung 1 kann vorgesehen sein, dass das erste Antriebselement 21 allein und nur die erste Antriebskraft 70 und das zweite Antriebselement 22 allein und nur die zweite Antriebskraft 71 erzeugt und jeweils mit dieser den Aufnahmeabschnitt 10 beaufschlagt.

In Fig. 1 ist deutlich zu erkennen, dass die zweite Antriebskraft 71, insbesondere bedingt durch das Zusammenwirken des ersten 21 und des zweiten Antriebselements 22, größer ist als die erste Antriebskraft 70. Um ein Herausschnellen des Aufnahmeabschnitts 10, insbesondere über den Positionsabstand P und/oder kurz vor Erreichen der Aufnahmeposition A, zu vermeiden beziehungsweise zu verhindern, weist eine erfindungsgemäße Aufnahmevorrichtung 1 eine Dämpfungsvorrichtung 30 auf, die zum Beaufschlagen des Aufnahmeabschnitts 10 mit einer ersten 80 und einer zweiten Dämpfungskraft 81 ausgebildet ist. Der Aufnahmeabschnitt 10 wird dabei durch die Dämpfungskräfte 80, 81 entgegen den Antriebskräften 70, 71 beaufschlagt. Dadurch vermindert sich jeweils eine effektive, resultierende Kraft, die den Aufnahmeabschnitt 10 in seiner Bewegung antreibt, wodurch diese Bewegung gedämpft ist. Dabei ist erfindungswesentlich vorgesehen, dass die zweite Dämpfungskraft 81 größer ist als die erste Dämpfungskraft 80. Durch die größere zweite Dämpfungskraft 81 wird insbesondere die größere zweite Antriebskraft 71 berücksichtigt. Ein Herausschnellen des Aufnahmeabschnitts 10 in seine Aufnahmeposition A kann dadurch verhindert werden. Bevorzugt ist dabei die Größe der zweiten Dämpfungskraft 81 derart gewählt, dass der Unterschied zwischen der ersten und der zweiten Antriebskraft 70, 71, also die daraus insgesamt resultierende Zunahme der Antriebskraft, kompensiert ist. Auf diese Weise kann erreicht werden, dass über die gesamte Ausfahrbewegung des Aufnahmeelements 10 eine zumindest im Wesentlichen gleichmäßige resultierende Kraft auf das Aufnahmeelement 10 wirkt. Ein besonders gleichmäßiges Ausfahren, insbesondere mit gleichmäßiger, bevorzugt konstanter, Geschwindigkeit des Aufnahmeabschnitts 10 kann dadurch bereitgestellt werden.

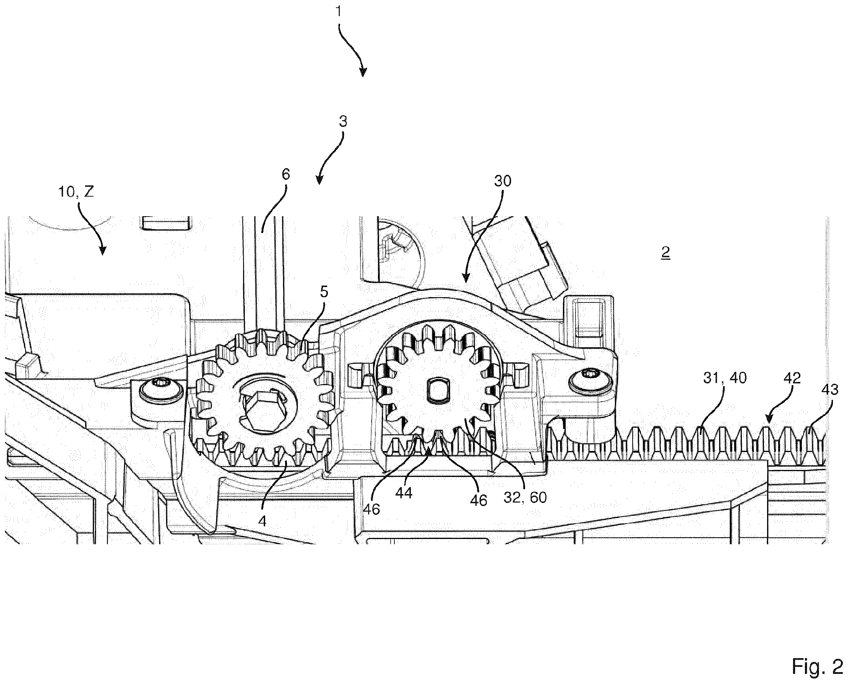

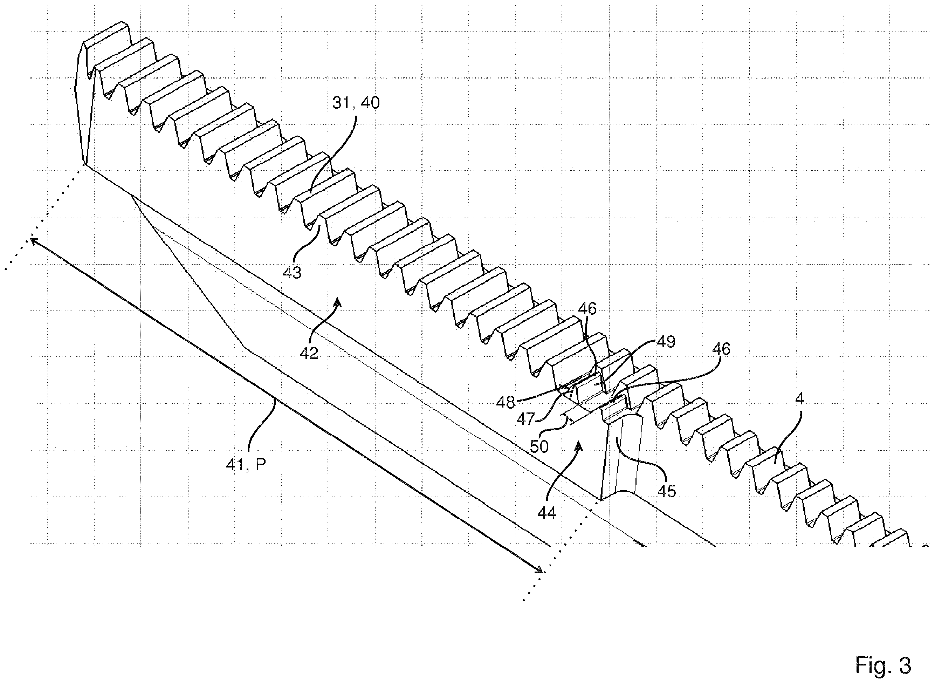

In Fig. 2 ist eine Teilansicht einer erfindungsgemäßen Aufnahmevorrichtung 1 gezeigt, wobei insbesondere eine im Inneren des Grundkörpers 2 angeordnete Parallellaufeinheit 3 und eine Dämpfungsvorrichtung 30 gezeigt sind. Die Fig. 3, 4 sowie 5 zeigen jeweils Detailansichten von einzelnen Elementen dieser Ausgestaltungsform, so dass die Fig. 2 bis 5 im Folgenden gemeinsam beschrieben werden.

Die abgebildete Ausgestaltungsform einer erfindungsgemäßen Aufnahmevorrichtung 1 weist eine Parallellaufeinheit 3 auf, die in Fig. 2 teilweise abgebildet ist. Dabei greift ein erstes Parallelzahnrad 5 kämmend in eine erste Parallelzahnstange 4 ein. Das erste Parallelzahnrad 5 ist über eine Achse 6 im Grundkörper 2 gelagert. Am entgegengesetzten Ende der Achse 6 ist ein zweites Parallelzahnrad angeordnet, das in eine zweite Parallelzahnstange kämmend eingreift (jeweils nicht mit abgebildet). Beide Parallelzahnstangen 4 sind am Aufnahmeabschnitt 10 angeordnet, der in seiner Zwischenposition Z abgebildet ist, und folgen somit dessen Bewegung. Durch die Achse 6 wird dabei sichergestellt, dass sich die beiden Parallelzahnräder 5 nur synchron drehen können, wodurch automatisch auch eine gleichmäßige Linearbewegung der beiden Parallelzahnstangen 4 und dadurch automatisch auch des Aufnahmeabschnitts 10 sichergestellt werden kann. Eine Verkippen und/oder Verkanten des Aufnahmeabschnitts 10 bei seiner Bewegung aus der Ruheposition R (nicht mit abgebildet) über die Zwischenposition Z in die Aufnahmeposition A (nicht mit abgebildet) kann dadurch verhindert werden.

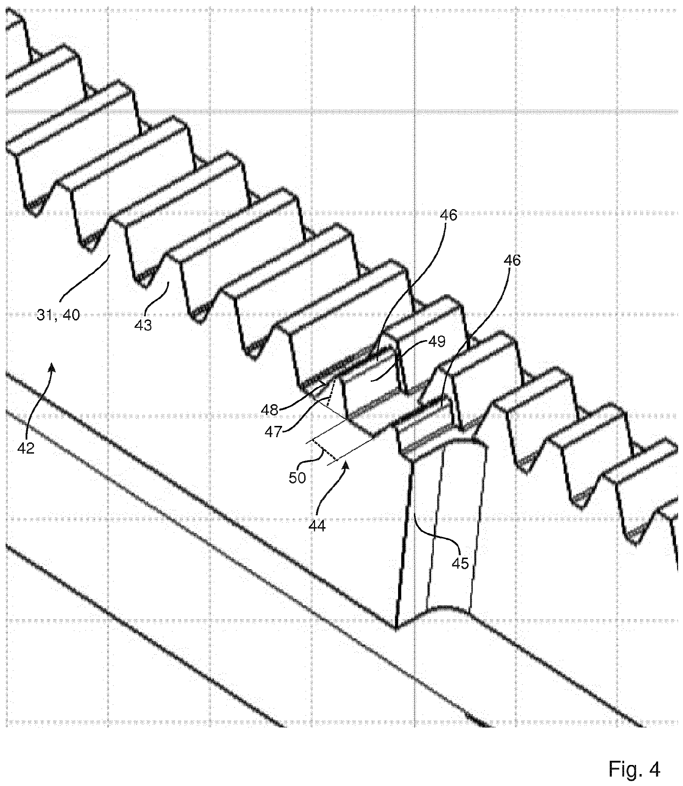

Ferner ist in Fig. 2 eine Dämpfungsvorrichtung 30 abgebildet, die insbesondere ein Bewegelement 31 und ein Dämpfelement 32 umfasst. Das Bewegelement 31 ist dabei als eine Zahnstange 40 ausgebildet, die am Aufnahmeabschnitt 10 angeordnet ist. Dadurch kann, analog zu den Parallelzahnstangen 4, bereitgestellt werden, dass das Bewegelement 31 einer Bewegung des Aufnahmeabschnitts 10 folgt. In dieser Ausgestaltungsform ist die Zahnstange 40 dabei sogar einstückig mit der ersten Parallelzahnstange 4 ausgebildet, wie insbesondere aus Fig. 3 und 4 ersichtlich. Dabei sind die Zähne 43 der Zahnstange 40 zumindest in einem Hauptabschnitt 42 der Zahnstange 40 gleich geformt und fluchtend angeordnet gegenüber den Zähnen der ersten Parallelzahnstange 4. Eine besonders kompakte und konstruktiv einfache Ausgestaltung einer erfindungsgemäßen Aufnahmevorrichtung 1 kann dadurch erreicht werden. Ferner umfasst das Dämpfelement 32 ein Zahnrad 60, das zumindest zwischen der Zwischenposition Z und der Aufnahmeposition A kämmend in die Zahnstange 40 eingreift. Durch das Dämpfelement 32 wird dabei eine zweite Dämpfungskraft 81 (nicht mit abgebildet) erzeugt und damit durch den kämmenden Eingriff über die Zahnstange 40 der Aufnahmeabschnitt 10 beaufschlagt. Für das Erzeugen der Dämpfungskraft kann beispielsweise ein Flügelrad vorgesehen sein, das mit dem Zahnrad, beispielsweise über eine gemeinsame Achse, mechanisch wirkverbunden ist und das zumindest abschnittsweise in einem Dämpfungsfluid, beispielsweise in einem Fett und/oder in einem Öl und/oder in einer silikonhaltigen Flüssigkeit, rotiert. Ferner ist eine Länge 41 der abgebildeten Zahnstange 40 einem Positionsabstand P (siehe Fig. 1) angepasst. Da dadurch in der gezeigten Ausgestaltungsform der kämmende Eingriff des Zahnrads 60 in die Zahnstange 40 nur zwischen der Zwischenposition Z und der Aufnahmeposition A (nicht mit abgebildet) des Aufnahmeabschnitts 10 erfolgt, kann besonders einfach erreicht werden, dass die zweite Dämpfungskraft 81 größer ist als eine erste Dämpfungskraft 80 (nicht mit abgebildet).

In Fig. 2 ist der Aufnahmeabschnitt 10 in seiner Zwischenposition Z gezeigt. Das bedeutet, dass der kämmende Eingriff des Zahnrads 60 in die Zahnstange 40 gerade beginnt. Um dies zu erleichtern weist die Zahnstange 40 an einem Ende 45, bei dem der kämmende Eingriff beginnt, einen Einlaufabschnitt 44 auf, in dem zwei Einlaufzähne 46 angeordnet sind. Dies ist insbesondere in Fig. 3 und nochmals vergrößert in Fig. 4 dargestellt. Die beiden Einlaufzähne 46 weisen dabei eine ähnliche Geometrie auf, das heißt, sie unterschieden sich nur in ihrer Größe beziehungsweise in einer Skalierung. Dabei nimmt eine Höhe 47 der Einlaufzähne 46 in Richtung des Hauptabschnitts 42 zu. Ferner sind die Einlaufzähne 46 asymmetrisch ausgebildet, wobei eine erste Flanke 48, die dem Hauptabschnitt 42 zugewandt ist, flacher ist als eine zweite Flanke 49, die dem Hauptabschnitt 24 abgewandt ist. Ein weiteres Merkmal des Einlaufabschnitts 44 ist, dass Zahnabstände 50 im Vergleich zu den Abständen benachbarter Zähne 43 im Hauptabschnitt 42 vergrößert sind, wobei die Größe der Zahnabstände 50 in Richtung des Hauptabschnitts 42 abnimmt. Insgesamt nähern sich die Werte der Höhe 47 und der Zahnabstände 50 den Werten an, den diese Größen auch im Hauptabschnitt 42 aufweisen. Durch den Einlaufabschnitt 44 und insbesondere durch die spezielle Ausformung der Einlaufzähne 46 kann dabei ein Beginn des kämmenden Eingreifens des Zahnrads 60 in die Zahnstange 40 erleichtert werden. Ein Herstellen der mechanischen Wirkverbindung zwischen der Zahnstange 40 beziehungsweise dem Bewegelement 31 und dem Zahnrad 60 beziehungsweise dem Dämpfelement 32 kann dadurch bereitgestellt und insbesondere erleichtert werden, ohne dass ein Verkanten der beteiligten mechanischen Komponenten gegeneinander befürchtet werden muss.

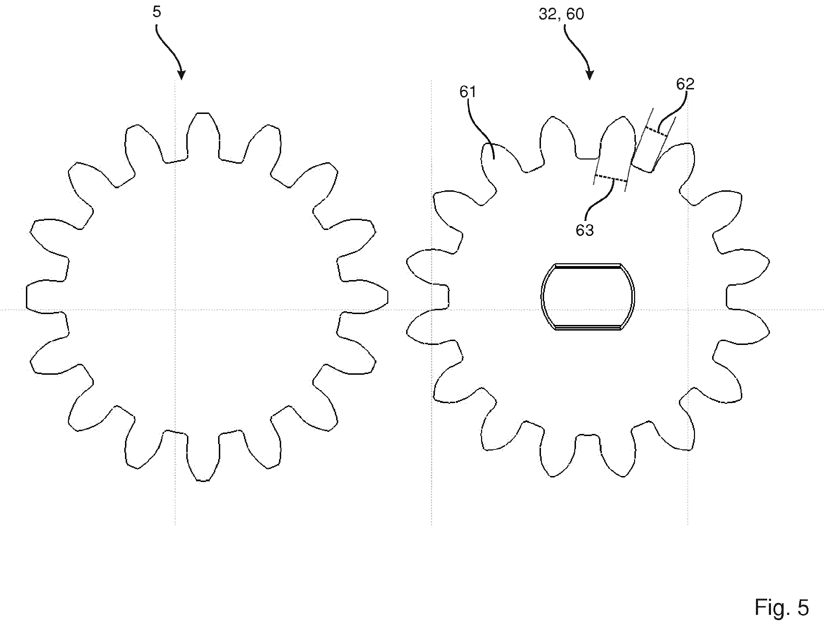

Durch die in Fig. 5 gezeigte besondere Ausgestaltung des Zahnrads 60 kann dies weiter unterstützt werden. Dabei ist insbesondere zum Vergleich ebenfalls in Fig. 6 das erste Parallelzahnrad 5 abgebildet. Dabei ist deutlich sichtbar, dass die Mitnehmerzähne 61 des Zahnrads 62 spitz zulaufen und insbesondere an ihren radialen Enden kein Plateau aufweisen, wie es bei den Zähnen des Parallelzahnrads 5 der Fall ist. Auch sind die Mitnehmerzähne 61 an ihrer Basis 63 breiter, als ein umläufiger Abstand 62 benachbarter Mitnehmerzähne 61. Auch durch diese konstruktiven Maßnahmen kann ein Verkanten des Zahnrads 60 gegen die Zahnstange 40, insbesondere bei einem Beginn des kämmenden Eingreifens, vermieden oder zumindest erschwert werden.

### Bezugszeichenliste

- 1: Aufnahmevorrichtung
- 2: Grundkörper
- 3: Parallellaufeinheit
- 4: erste Parallelzahnstange
- 5: erstes Parallelzahnrad
- 6: Achse

- 10: Aufnahmeabschnitt
- 11: Aufnahmeboden
- 12: Steg

- 20: Antriebseinheit
- 21: erstes Antriebselement
- 22: zweites Antriebselement

- 30: Dämpfungsvorrichtung
- 31: Bewegelement
- 32: Dämpfelement

- 40: Zahnstange
- 41: Länge
- 42: Hauptabschnitt
- 43: Zahn
- 44: Einlaufabschnitt
- 45: Ende
- 46: Einlaufzahn
- 47: Höhe
- 48: erste Flanke
- 49: zweite Flanke
- 50: Zahnabstand

- 60: Zahnrad
- 61: Mitnehmerzahn
- 62: Abstand
- 63: Basis

- 70: erste Antriebskraft
- 71: zweite Antriebskraft

- 80: erste Dämpfungskraft
- 81: zweite Dämpfungskraft

- 90: Fahrzeuginnenraum
- 91: Oberfläche

- A: Aufnahmeposition
- P: Positionsabstand
- R: Ruheposition
- Z: Zwischenposition

## Patentansprüche

1. Aufnahmevorrichtung (1) für einen Fahrzeuginnenraum (90), aufweisend einen Aufnahmeabschnitt (10) zum Aufnehmen von Gegenständen in einer Aufnahmeposition (A) des Aufnahmeabschnitts (10), einen Grundkörper (2), in dem der Aufnahmeabschnitt (10) in einer Ruheposition (R) des Aufnahmeabschnitts (10) angeordnet ist, eine Antriebseinheit (20) zum Bewegen des Aufnahmeabschnitts (10) aus der Ruheposition (R) über eine Zwischenposition (Z) in die Aufnahmeposition (A), in welcher der Aufnahmeabschnitt (10) aus dem Grundkörper (2) herausragt, wobei die Antriebseinheit (20) den Aufnahmeabschnitt (10) zum Bewegen aus der Ruheposition (R) in die Zwischenposition (Z) mit einer ersten Antriebskraft (70) beaufschlagt und zum Bewegen aus der Zwischenposition (Z) in die Aufnahmeposition (A) mit einer zweiten Antriebskraft (71) beaufschlagt, wobei die erste Antriebskraft (70) kleiner ist als die zweite Antriebskraft (71), weiter aufweisend eine Dämpfungsvorrichtung (30) zum Beaufschlagen des Aufnahmeabschnitts (10) mit einer ersten Dämpfungskraft (80) entgegen der ersten Antriebskraft (70) und einer zweiten Dämpfungskraft (81) entgegen der zweiten Antriebskraft (71), wobei die zweite Dämpfungskraft (81) größer ist als die erste Dämpfungskraft (80),
wobei die Dämpfungsvorrichtung (30) zweiteilig ausgebildet ist und ein Bewegelement (31) zum Folgen einer Bewegung des Aufnahmeabschnitts (10) sowie ein Dämpfelement (32) zur Erzeugung der ersten Dämpfungskraft (80) und/oder zweiten Dämpfungskraft (81) aufweist, wobei das Bewegelement (31) am Aufnahmeabschnitt (10) angeordnet ist und dadurch einer Bewegung des Aufnahmeabschnitts (10) folgt, und wobei das Dämpfelement (32) im Grundkörper (2) angeordnet ist und derart mit dem Bewegelement (31) mechanisch wirkverbunden ist, dass das Dämpfelement (32) den Aufnahmeabschnitt (10) mit der erzeugten ersten und/oder zweiten Dämpfungskraft (81) beaufschlägt,
wobei das Bewegelement (31) eine Zahnstange (40) ist und das Dämpfelement (32) ein Zahnrad (60) umfasst, wobei eine Länge (41) der Zahnstange (40) einem Positionsabstand (P) zwischen der Zwischenposition (Z) und der Aufnahmeposition (A) angepasst ist und wobei zur Herstellung der mechanischen Wirkverbindung zwischen dem Bewegelement (31) und dem Dämpfelement (32) das Zahnrad (60) bei einem Aufnahmeabschnitt (10), der sich zwischen der Zwischenposition (Z) und der Aufnahmeposition (A) befindet, in die Zahnstange (40) kämmend eingreift,
wobei dieses Eingreifen während der Bewegung erst beginnt, wenn sich der Aufnahmeabschnitt (10) in der Zwischenposition (Z) befindet.

2. Aufnahmevorrichtung (1) nach Anspruch 1,
**dadurch gekennzeichnet,**
**dass** die Antriebseinheit (20) ein erstes Antriebselement (21) und ein zweites Antriebselement (22), insbesondere ein erstes und ein zweites Federelement, aufweist, wobei das erste Antriebselement (21) den Aufnahmeabschnitt (10) zumindest mit der ersten Antriebskraft (70) beaufschlägt und das zweite Antriebselement (22) den Aufnahmeabschnitt (10) mit der zweiten Antriebskraft (71) beaufschlägt.

3. Aufnahmevorrichtung (1) nach einem der vorangegangenen Ansprüche,
**dadurch gekennzeichnet,**
**dass** die zweite Dämpfungskraft (81) die Kraftzunahme von der ersten Antriebskraft (70) zur zweiten Antriebskraft (71) kompensiert oder zumindest im Wesentlichen kompensiert.

4. Aufnahmevorrichtung (1) nach einem der vorangegangenen Ansprüche,
**dadurch gekennzeichnet,**
**dass** das Zahnrad (60) spitz zulaufende oder zumindest im Wesentlichen spitz zulaufende Mitnehmerzähne (61) aufweist und/oder dass das Zahnrad (60) Mitnehmerzähne (61) aufweist, die an ihrer Basis (63) breiter sind als ein umläufiger Abstand (62) benachbarter Mitnehmerzähne (61).

5. Aufnahmevorrichtung (1) nach einem der vorangegangenen Ansprüche,
**dadurch gekennzeichnet,**
**dass** die Zahnstange (40) einen Hauptabschnitt (42) mit einer Vielzahl von gleichartigen Zähnen (43) und einen Einlaufabschnitt (44) mit zumindest einem Einlaufzahn (46) aufweist, wobei der Einlaufabschnitt (44) an einem Ende (45) der Zahnstange (40) angeordnet ist, welches bei einem Aufnahmeabschnitt (10) in der Zwischenposition (Z) oder zumindest im Wesentlichen in der Zwischenposition (Z) das Zahnrad (60) kontaktiert und wobei der zumindest eine Einlaufzahn (46) zum Herstellen der mechanischen Wirkverbindung zwischen der Zahnstange (40) und dem Zahnrad (60) ausgebildet ist.

6. Aufnahmevorrichtung (1) nach Anspruch 5,
**dadurch gekennzeichnet,**
**dass** der zumindest eine Einlaufzahn (46) zumindest eines der folgenden Merkmale aufweist:
- **dass** der zumindest eine Einlaufzahn (46) eine geringere Höhe (47) aufweist als die Zähne (43) im Hauptabschnitt (42) der Zahnstange (40),
- **dass** der zumindest eine Einlaufzahn (46) asymmetrisch ausgebildet ist, wobei eine dem Hauptabschnitt (42) zugewandte erste Flanke (48) des zumindest einen Einlaufzahns (46) flacher ist, als eine dem Hauptabschnitt (42) abgewandte zweite Flanke (49),
- **dass** ein Zahnabstand (50) des zumindest einen Einlaufzahns (46) zu einem benachbarten Zahn (43) im Hauptabschnitt (42) größer ist als ein Abstand (62) benachbarter Zähne (43) des Hauptabschnitts (42).

7. Aufnahmevorrichtung (1) nach einem der Ansprüche 5 oder 6,
**dadurch gekennzeichnet,**
**dass** der Einlaufabschnitt (44) zwei oder mehr Einlaufzähne (46) aufweist.

8. Aufnahmevorrichtung (1) nach Anspruch 7,
**dadurch gekennzeichnet,**
**dass** die Einlaufzähne (46) eine zueinander ähnliche Geometrie aufweisen.

9. Aufnahmevorrichtung (1) nach Anspruch 7 oder 8,
**dadurch gekennzeichnet,**
**dass** die Höhe (47) der einzelnen Einlaufzähne (46) im Einlaufabschnitt (44) in Richtung des Hauptabschnitts (42) zunimmt, insbesondere gleichmäßig zunimmt.

10. Aufnahmevorrichtung (1) nach einem der Ansprüche 7 bis 9,
**dadurch gekennzeichnet,**
**dass** ein Zahnabstand (50) der einzelnen Einlaufzähne (46) im Einlaufabschnitt (44) in Richtung des Hauptabschnitts (42) abnimmt, insbesondere gleichmäßig abnimmt.

11. Aufnahmevorrichtung (1) nach einem der vorangegangenen Ansprüche,
**dadurch gekennzeichnet,**
**dass** die Aufnahmevorrichtung (1) eine Parallellaufeinheit (3) aufweist, wobei die Parallellaufeinheit (3) eine erste Parallelzahnstange (4) und eine zweite Parallelzahnstange, die parallel zueinander und parallel zur ersten Antriebskraft (70) und zweiten Antriebskraft (71) am Aufnahmeabschnitt (10) angeordnet sind, und ferner ein erstes Parallelzahnrad (5) und ein zweites Parallelzahnrad aufweist, wobei die Parallelzahnräder (5) durch eine im Grundkörper (2) gelagerte Achse (6) verbunden sind und das erste Parallelzahnrad (5) kämmend in die erste Parallelzahnstange (4) eingreift und das zweite Parallelzahnrad kämmend in die zweite Parallelzahnstange eingreift, und wobei ferner die Zahnstange (40) der der Dämpfungsvorrichtung (30) einstückig mit der ersten Parallelzahnstange (4) ausgebildet ist.

12. Aufnahmevorrichtung (1) nach Anspruch 11,
**dadurch gekennzeichnet,**
**dass** die Zahnstange (40) einen Hauptabschnitt (42) mit einer Vielzahl von gleichartigen Zähnen (43) aufweist, wobei die Zähne (43) im Hauptabschnitt (42) und die Zähne der ersten Parallelzahnstange (4) gleich geformt ausgebildet sind und/oder fluchtend zueinander angeordnet sind.

13. Verfahren zum Dämpfen einer Bewegung eines Aufnahmeabschnitts (10) einer Aufnahmevorrichtung (1) für einen Fahrzeuginnenraum (90) nach einem der vorangegangenen Ansprüche, wobei durch die Dämpfungsvorrichtung (30) eine Bewegung des Aufnahmeabschnitts (10) aus der Zwischenposition (Z) in die Aufnahmeposition (A) stärker gedämpft wird als eine Bewegung des Aufnahmeabschnitts (10) aus der Ruheposition (R) in die Zwischenposition (Z).

## Claims

1. Receiving device (1) for a vehicle interior (90), comprising a receiving section (10) for picking up objects in a receiving position (A) of the receiving section (10), a base body (2), in which the receiving section (10) is arranged in a rest position (R) of the receiving section (10), a drive unit (20) for moving the receiving section (10) from the rest position (R) via an intermediate position (Z) into the receiving position (A), in which the receiving section (10) protrudes from the base body (2), wherein the drive unit (20) applies a first drive force (70) to the receiving section (10) for moving it from the rest position (R) into the intermediate position (Z) and applies a second drive force (71) to the receiving section (10) for moving it from the intermediate position (Z) into the receiving position (A), wherein the first drive force (70) is smaller than the second drive force (71), further comprising a damping device (30) for acting on the receiving section (10) with a first damping force (80) counter to the first drive force (70) and a second damping force (81) counter to the second drive force (71), the second damping force (81) being greater than the first damping force (80), wherein the damping device (30) is formed in two parts and comprises a moving member (31) for following a movement of the receiving section (10) and a damping member (32) for generating the first damping force (80) and/or the second damping force (81), wherein the moving member (31) is arranged at the receiving section (10) and thereby follows a movement of the receiving section (10) and wherein the damping element (32) is arranged in the base body (2) and is mechanically operatively connected to the moving element (31) in such a way that the damping element (32) applies the generated first and/or second damping force (81) to the receiving section (10), wherein the moving element (31) is a toothed rack (40) and the damping element (32) comprises a toothed wheel (60), wherein a length (41) of the toothed rack (40) is adapted to a positional spacing (P) between the intermediate position (Z) and the receiving position (A), and wherein, in order to produce the mechanically operative connection between the moving element (31) and the damping element (32), the toothed wheel (60) is arranged at a receiving section (10) which is located between the intermediate position (Z) and the receiving position (A), the toothed wheel (60) meshingly engages in the toothed rack (40), this engagement only beginning during the movement when the receiving section (10) is located in the intermediate position (Z).

2. Receiving device (1) according to claim 1,
**characterized in that**
the drive unit (20) has a first drive element (21) and a second drive element (22), in particular a first and a second spring element, the first drive element (21) acting on the receiving section (10) at least with the first drive force (70) and the second drive element (22) acting on the receiving section (10) with the second drive force (71).

3. Receiving device (1) according to any one of the preceding claims,
**characterized in that**
the second damping force (81) compensates or at least substantially compensates for the increase in force from the first drive force (70) to the second drive force (71).

4. Receiving device (1) according to any one of the preceding claims,
**characterized in that**
the toothed wheel (60) has tapered or at least substantially tapered driver teeth (61) and/or in that the toothed wheel (60) has driver teeth (61) which are wider at their base (63) than a circumferential spacing (62) of adjacent driver teeth (61).

5. Receiving device (1) according to any one of the preceding claims,
**characterized in that**
the toothed rack (40) comprises a main portion (42) with a plurality of similar teeth (43) and a run-in portion (44) with at least one run-in tooth (46), wherein the run-in portion (44) is arranged at one end (45) of the toothed rack (40) which, in the case of a receiving section (10), contacts the toothed wheel (60) in the intermediate position (Z) or at least essentially in the intermediate position (Z), and the at least one run-in tooth (46) being designed to produce the mechanical operative connection between the toothed rack (40) and the toothed wheel (60).

6. Receiving device (1) according to claim 5,
**characterized in that**
the at least one run-in tooth (46) comprises at least one of the following features:
- the at least one run-in tooth (46) has a lower height (47) than the teeth (43) in the main portion (42) of the toothed rack (40),
- the at least one run-in tooth (46) is formed asymmetrically, wherein a first flank (48) of the at least one run-in tooth (46) facing the main portion (42) is flatter than a second flank (49) facing away from the main portion (42),
- a tooth distance (50) of the at least one run-in tooth (46) to an adjacent tooth (43) in the main portion (42) is greater than a distance (62) of adjacent teeth (43) of the main portion (42).

7. Receiving device (1) according to one of claims 5 or 6,
**characterized in that**
the run-in portion (44) has two or more run-in teeth (46).

8. Receiving device (1) according to claim 7,
**characterized in that**
the run-in teeth (46) have a similar geometry to each other.

9. Receiving device (1) according to claim 7 or 8,
**characterized in that**
the height (47) of the individual run-in teeth (46) in the run-in portion (44) increases in the direction of the main portion (42), in particular increases uniformly.

10. Receiving device (1) according to any one of claims 7 to 9,
**characterized in that**
a tooth distance (50) of the individual run-in teeth (46) in the run-in portion (44) decreases in the direction of the main portion (42), in particular decreases uniformly.

11. Receiving device (1) according to any one of the preceding claims,
**characterized in that**
the receiving device (1) has a parallel-running unit (3), the parallel-running unit (3) having a first parallel rack (4) and a second parallel rack, which are arranged parallel to one another and parallel to the first drive force (70) and second drive force (71) on the receiving section (10), and also having a first parallel gear (5) and a second parallel gear wherein the parallel gears (5) are connected by an axle (6) supported in the base body (2) and the first parallel gear (5) meshingly engages the first parallel rack (4) and the second parallel gear meshingly engages the second parallel rack, and further wherein the toothed rack (40) of the damping device (30) is integrally formed with the first parallel rack (4).

12. Receiving device (1) according to claim 11,
**characterized in that**
the toothed rack (40) has a main portion (42) with a plurality of teeth (43) of the same type, the teeth (43) in the main portion (42) and the teeth of the first parallel rack (4) being of the same shape and/or being arranged in alignment with one another.

13. Method for damping a movement of a receiving section (10) of a receiving device (1) for vehicle interior (90) according to one of the preceding claims, wherein a movement of the receiving section (10) from the intermediate position (Z) into the receiving position (A) is damped more strongly by the damping device (30) than a movement of the receiving section (10) from the rest position (R) into the intermediate position (Z).

## Revendications

1. Dispositif de réception (1) pour un habitacle de véhicule (90), présentant une section de réception (10) pour recevoir des objets dans une position de réception (A) de la section de réception (10), un corps de base (2), dans lequel la section de réception (10) est disposée dans une position de repos (R) de la section de réception (10), une unité d'entraînement (20) pour déplacer la section de réception (10) de la position de repos (R) via une position intermédiaire (Z) dans la position de réception (A), dans laquelle la section de réception (10) dépasse du corps de base (2), l'unité d'entraînement (20) sollicitant la section de réception (10) avec une première force d'entraînement (70) pour la déplacer de la position de repos (R) à la position intermédiaire (Z) et la sollicitant avec une deuxième force d'entraînement (71) pour la déplacer de la position intermédiaire (Z) à la position de réception (A), la première force d'entraînement (70) étant inférieure à la deuxième force d'entraînement (71), comprenant en outre un dispositif d'amortissement (30) pour appliquer à la section de réception (10) une première force d'amortissement (80) à l'encontre de la première force d'entraînement (70) et une deuxième force d'amortissement (81) à l'encontre de la deuxième force d'entraînement (71), la deuxième force d'amortissement (81) étant supérieure à la première force d'amortissement (80), le dispositif d'amortissement (30) étant réalisé en deux parties et présentant un élément de déplacement (31) pour suivre un mouvement de la section de réception (10) ainsi qu'un élément d'amortissement (32) pour générer la première force d'amortissement (80) et/ou la deuxième force d'amortissement (81), l'élément de déplacement (31) étant disposé sur la section de réception (10) et suivant ainsi un mouvement de la section de réception (10), et l'élément d'amortissement (32) étant disposé dans le corps de base (2) et étant en liaison mécanique active avec l'élément de déplacement (31) de telle sorte que l'élément d'amortissement (32) sollicite la section de réception (10) avec la première et/ou la deuxième force d'amortissement (81) générée, l'élément de déplacement (31) étant une crémaillère (40) et l'élément d'amortissement (32) comprenant une roue dentée (60), une longueur (41) de la crémaillère (40) étant adaptée à une distance de position (P) entre la position intermédiaire (Z) et la position de réception (A) et, pour établir la liaison mécanique active entre l'élément de déplacement (31) et l'élément d'amortissement (32), la roue dentée (60) étant montée sur une section de réception (10), qui se trouve entre la position intermédiaire (Z) et la position de réception (A), s'engrène dans la crémaillère (40), cet engrènement ne commençant pendant le mouvement que lorsque la section de réception (10) se trouve dans la position intermédiaire (Z).

2. Dispositif de réception (1) selon la revendication 1,
**caractérisé en ce que**
l'unité d'entraînement (20) présente un premier élément d'entraînement (21) et un deuxième élément d'entraînement (22), en particulier un premier et un deuxième élément à ressort, le premier élément d'entraînement (21) sollicitant la section de réception (10) au moins avec la première force d'entraînement (70) et le deuxième élément d'entraînement (22) sollicitant la section de réception (10) avec la deuxième force d'entraînement (71).

3. Dispositif de réception (1) selon l'une des revendications précédentes,
**caractérisé en ce que**
la deuxième force d'amortissement (81) compense ou au moins compense sensiblement l'augmentation de force de la première force d'entraînement (70) à la deuxième force d'entraînement (71).

4. Dispositif de réception (1) selon l'une des revendications précédentes,
**caractérisé en ce que**
la roue dentée (60) présente des dents d'entraînement (61) se terminant en pointe ou au moins essentiellement en pointe et/ou que la roue dentée (60) présente des dents d'entraînement (61) qui sont plus larges à leur base (63) qu'une distance périphérique (62) de dents d'entraînement (61) voisines.

5. Dispositif de réception (1) selon l'une des revendications précédentes,
**caractérisé en ce que**
la crémaillère (40) présente une section principale (42) avec une pluralité de dents (43) de même type et une section d'entrée (44) avec au moins une dent d'entrée (46), la section d'entrée (44) étant disposée à une extrémité (45) de la crémaillère (40), qui, dans une section de réception (10), est en contact avec la roue dentée (60) dans la position intermédiaire (Z) ou au moins essentiellement dans la position intermédiaire (Z), et dans lequel l'au moins une dent d'entrée (46) est conçue pour établir la liaison mécanique active entre la crémaillère (40) et la roue dentée (60).

6. Dispositif de réception (1) selon la revendication 5,
**caractérisé en ce que**
l'au moins une dent d'entrée (46) présente au moins l'une des caractéristiques suivantes :
- ladite au moins une dent d'entrée (46) a une hauteur (47) inférieure à celle des dents (43) dans la section principale (42) de la crémaillère (40),
- l'au moins une dent d'entrée (46) est réalisée de manière asymétrique, un premier flanc (48), tourné vers la section principale (42), de l'au moins une dent d'entrée (46) étant plus plat qu'un deuxième flanc (49) opposé à la section principale (42),
- un espacement de dents (50) de la au moins une dent d'entrée (46) par rapport à une dent voisine (43) dans la section principale (42) est supérieur à un espacement (62) de dents voisines (43) de la section principale (42).

7. Dispositif de réception (1) selon l'une des revendications 5 ou 6,
**caractérisé en ce que**
la section d'entrée (44) comprend deux ou plusieurs dents d'entrée (46).

8. Dispositif de réception (1) selon la revendication 7,
**caractérisé en ce que**
les dents d'entrée (46) présentent une géométrie similaire les unes aux autres.

9. Dispositif de réception (1) selon la revendication 7 ou 8,
**caractérisé en ce que**
la hauteur (47) des différentes dents d'entrée (46) dans la section d'entrée (44) augmente en direction de la section principale (42), en particulier augmente de manière régulière.

10. Dispositif de réception (1) selon l'une quelconque des revendications 7 à 9,
**caractérisé en ce qu'**
un espacement de dents (50) des dents d'entrée individuelles (46) dans la section d'entrée (44) diminue en direction de la section principale (42), en particulier diminue régulièrement.

11. Dispositif de réception (1) selon l'une des revendications précédentes,
**caractérisé en ce que**
le dispositif de réception (1) présente une unité de marche parallèle (3), l'unité de marche parallèle (3) présentant une première crémaillère parallèle (4) et une deuxième crémaillère parallèle, qui sont disposées parallèlement l'une à l'autre et parallèlement à la première force d'entraînement (70) et à la deuxième force d'entraînement (71) sur la section de réception (10), et présentant en outre une première roue dentée parallèle (5) et une deuxième roue dentée parallèle, les roues dentées parallèles (5) étant reliées par un axe (6) logé dans le corps de base (2) et la première roue dentée parallèle (5) s'engrenant dans la première crémaillère parallèle (4) et la deuxième roue dentée parallèle s'engrenant dans la deuxième crémaillère parallèle, et la crémaillère (40) du dispositif d'amortissement (30) étant en outre réalisée d'une seule pièce avec la première crémaillère parallèle (4).

12. Dispositif de réception (1) selon la revendication 11,
**caractérisé en ce que**
la crémaillère (40) comprend une section principale (42) ayant une pluralité de dents (43) de même type, les dents (43) dans la section principale (42) et les dents de la première crémaillère parallèle (4) étant formées de la même manière et/ou étant alignées les unes avec les autres.

13. Procédé pour amortir un mouvement d'une section de réception (10) d'un dispositif de réception (1) pour un habitacle de véhicule (90) selon l'une des revendications précédentes, dans lequel, grâce au dispositif d'amortissement (30), un mouvement de la section de réception (10) de la position intermédiaire (Z) à la position de réception (A) est plus fortement amorti qu'un mouvement de la section de réception (10) de la position de repos (R) à la position intermédiaire (Z).
